# EUROPEAN PATENT APPLICATION

(11) **EP 4 095 394 A1**
(43) Date of publication of application: **30.11.2022**
(21) Application number: 21176357.8
(22) Date of filing: 27.05.2021
(51) Int. Cl.: F16B 5/02

(54) **TOLERANCE COMPENSATION DEVICE, CONNECTION SYSTEM COMPRISING THE SAME, AND METHOD OF MANUFACTURING THE SAME**

(71) Applicant: Bhavya Jumps GmbH, 33602 Bielefeld (DE)
(72) Inventor: MALHOTRA, Sanjay, 33619 Bielefeld (DE)
(74) Representative: Prüfer & Partner mbB Patentanwälte · Rechtsanwälte

(57) **Abstract**

A tolerance compensation device (10, 10', 10") for compensating for tolerances between a first component and a second component, wherein the first and second components are to be connected to each other by a connecting screw, comprises a base element (11, 11', 11"). The base element (11, 11', 11") comprises a first member (111, 111', 111") configured to be connected to the first component and a second member (112, 112', 112") comprising a first thread (1121, 1121', 1121"). The tolerance compensation device (10, 10', 10") further comprises a compensating element (12, 12', 12") configured to abut the second component and comprising a second thread (1211, 1211', 1211"). The first thread (1121, 1121', 1121") and the second thread (1211, 1211', 1211") are configured to engage with each other. When the first thread (1121, 1121', 1121") and the second thread (1211, 1211', 1211") engage with each other, the base element (11, 11', 11") and the compensating element (12, 12', 12") form a passage (13, 13', 13") for the connecting screw such that at least a portion of the compensating element (12, 12', 12") is rotated by a rotation of the connecting screw. The base element (11, 11', 11") comprises at least one rotation locking structure (1111, 1111', 1111") configured to engage with the first component such that the connection between the first component and the base element (11, 11', 11") is locked against rotation. The base element (11, 11', 11") is a pre-fabricated hybrid element comprising the first member (111, 111', 111") and the second member (112, 112', 112") being permanently joined together.

## Description

The present invention relates to a tolerance compensation device for compensating for tolerances between a first component and a second component, wherein the first and second components are to be connected to each other by a connecting screw. The present invention further relates to a connection system comprising such tolerance compensation device. The present invention further relates to a method of manufacturing such tolerance compensation device.

A device for connecting components is known from EP 1 180 605 A1. This device comprises a base element and a distance element. The base element and the distance element are in thread engagement. The connecting screw has an external thread with a handedness opposite to the threads of the base element and the distance element. A spring element is arranged in the distance element which provides a frictional connection between the distance element and the connecting screw extending through the same. The base element engages with a first of the components to be connected to each other. If the connecting screw for screwing together the components is guided through the components and the device and screwed either into a threaded bore of one of the components or into a nut element, then, owing to the frictional connection, the distance element rotates out of the base element until said distance element abuts the second component.

A device similar to that described in EP 1 180 605 A1 known to the Applicant is shown in Fig. 1. The components 1 and 2 to be connected to each other are by way of example shown as plate-like components. They both comprise a bore 1a and 2a, respectively, through which the connecting screw 3 is inserted. The connecting screw 3 is screwed into a nut 4. The first member 5 of the base element is connected to the component 1 by the pins 5a which are inserted in further bores 1b and 1c of the component 1 such that the first member 5 is rotationally locked. The second member 6 of the base element is connected with the first member 5. The second member 6 has an internal thread. The internal thread is in engagement with the external thread 7a of the distance element comprising two members 7 and 8. When the components 1 and 2 are connected to each other, the connecting screw 3 passes through the base element 5, 6 and the distance element 7, 8. A spring 9 causes a rotation of the distance element 7, 8 when the connecting screw 3 is rotated. However, a sliding movement of the connecting screw 3 relative to the spring 9 is allowed. The handedness of the internal thread of the base element and the external thread 7a on the one hand and the handedness of the threads of the connecting screw 3 and the nut 4 on the other hand are opposite to each other. Therefore, the external thread 7a is screwed out of the internal thread of the second member when the connecting screw 3 is screwed into the nut 4. When the screw connection is made, the connecting screw 3 and the nut 4 hold the components 1 and 2 together, while the device holds the components 1 and 2 at the distance corresponding to its length in the final screwed state.

In other words, such device can be seen as a spacer whose dimension adjusts automatically when the connecting screw is screwed in.

The known device have a complex structure and are therefore expensive. For example, the device described in EP 1 180 605 A1 requires the production of several pieces that have to be assembled in an additional step. In addition, the stability of such device is relatively low. For example, the individual components of the base element may easily separate from each other during transport, storage and assembly of the connecting screw. This may lead to a failure of the device. Furthermore, in the event of a failure during assembly, i.e. while the two components are being joined, the two components may lose their hold because the screw connection is not yet tight. This may result in damage to the components and even accidents.

A device described in US 2020/0173472 A1 may also be used to connect to components by a connecting screw. This device, however, is designed in such a manner that its use is only possible in the edge area of the components to be joined together. Moreover, this device can only fulfil its function if a nut element is fixed to one of the components, e.g. by welding. Hence, the nut is an integral part of the device. Moreover, preventing unwanted rotation of the device of US 2020/0173472 A1 when turning the connecting screw requires that the nut element is held by a clamp. Such a connection may easily be loosened unintentionally, leading to difficulties or failure during assembly.

In view of the situation described above, it is an object of the present invention to provide an improved tolerance compensation device, an improved connection system, and an improved method of manufacturing a tolerance compensation device.

This object is achieved by the tolerance compensation device according to claim 1, the connection system according to claim 13, and the method according to claim 15. Refinements of the invention are specified in the dependent claims. Any feature set forth in the dependent claims and in the description of exemplary embodiments below can be understood as a feature suitable for refining the tolerance compensation device, the connection system, and the method. The features of any of the described embodiments may be combined with features of another of the described embodiments to obtain still further embodiments.

The tolerance compensation device according to the invention is a tolerance compensation device for compensating for tolerances between a first component and a second component, wherein the first and second components are to be connected to each other by a connecting screw. The tolerance compensation device comprises a base element. The base element comprises a first member configured to be connected to the first component and a second member comprising a first thread. The tolerance compensation device further comprises a compensating element configured to abut against the second component and comprising a second thread. The first thread and the second thread are configured to engage with each other. When the first thread and the second thread engage with each other, the base element and the compensating element form a passage for the connecting screw such that at least a portion of the compensating element is rotated by a rotation of the connecting screw. The base element comprises at least one rotation locking structure configured to engage with the first component such that the connection between the first component and the base element is locked against rotation. The base element is a pre-fabricated hybrid element comprising the first member and the second member being permanently joined together.

Since the first member and the second member being permanently joined together in order to form the base element, the tolerance compensation device according to the invention may for instance provide an excellent stability and it may also be simple and uncomplicated to handle. In particular, the separation of the constituents of the base element during transport, storage and assembly of the connecting screw may be avoided in an efficient manner such that failure of the device, damage to the components, and accidents may be prevented. Moreover, the tolerance compensation device has relatively few individual components. In addition, the manufacture of the tolerance compensation device may be simplified by the invention.

Preferably, the hybrid element constituting the base element is manufactured by manufacturing the second member or providing a pre-fabricated second member and manufacture the first member by moulding. Herein, the second member is inserted in the mould so that, after moulding the first member, the second member is inserted in the first member. That is, the second member is used as insert in an insert moulding process. The insert moulding technique is also referred to as "insert injection moulding".

By using the insert moulding technique, for instance an excellently stable base element may be obtained and therefore the stability of the tolerance compensation device is significantly improved compared to the prior art. Moreover, using the insert moulding technique, the production may be significantly simplified and more cost-efficient because it is not necessary to assemble a pre-fabricated first member and a pre-fabricated second member.

If also the second member is produced by a moulding technique, the overall process of manufacturing the compensating device may be referred to as "overmoulding".

An improved stability of the compensating element leads to advantages in that it substantially improves the stability of the tolerance compensating device as a whole. In addition, it may help to prevent production failures and accidents.

The connection system according to the invention is a connection system for connection a first component and a second component by a connecting screw. The connection system according to the invention comprises a tolerance compensation device according to the invention and a connecting screw, wherein the connecting screw has a thread with a handedness being opposite to the handedness of the first and second threads. The connection system according to the invention optionally further comprises a nut configured to engage with the connecting screw.

Herewith, a connection system is provided in which the advantages of the tolerance compensation device are realised.

The method according to the invention is a method of manufacturing a tolerance compensation device according to the invention. The method includes manufacturing the base element. Manufacturing the base element either includes providing the second member and manufacturing the first member so that the first member is permanently joined to the second member. Or manufacturing the base element includes providing the first member and the second member and permanently joining together the first member and the second member.

Preferably, manufacturing the base elements includes providing the second member and manufacturing the first member by insertion moulding using the second member as an insert.

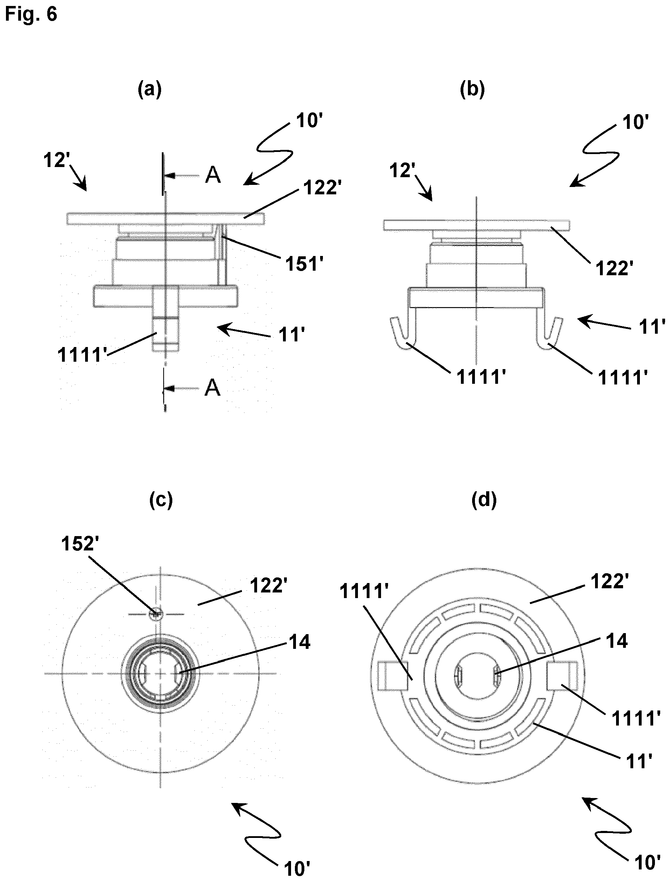

Further features and expediencies of the invention may be found in the description of exemplary embodiments with the aid of the appended drawings.
- Fig. 1: shows an exploded view of a device known to the Applicant together with the components to be connected to each other, a connecting screw, and a nut.
- Fig. 2 (a): shows a side view of the tolerance compensation device according to a first embodiment.
- Fig. 2 (b): shows another side view of the device according to the first embodiment, wherein the device is rotated by 90° compared to the view according to Fig. 2 (a).
- Fig. 2 (c): shows a top view of the device according to the first embodiment.
- Fig. 2 (d): shows a bottom view of the device according to the first embodiment.
- Figs. 3 (a) to 3 (d): show perspective views of the device according to the first embodiment from the bottom side (Figures 3 (a) and 3 (b)) and from the top side (Figures 3 (c) and 3 (d)).
- Fig. 4: shows an exploded view of the device according to the first embodiment.
- Fig. 5: shows a sectional view of the device according to the first embodiment, wherein the section plane A-A is indicated in Fig. 2 (a).
- Fig. 6 (a): shows a side view of the tolerance compensation device according to a second embodiment.
- Fig. 6 (b): shows another side view of the device according to the second embodiment, wherein the device is rotated by 90° compared to the view according to Fig. 6 (a).
- Fig. 6 (c): shows a top view of the device according to the second embodiment.
- Fig. 6 (d): shows a bottom view of the device according to the second embodiment.
- Figs. 7 (a) to 7 (d): show perspective views of the device according to the second embodiment from the bottom side (Figures 7 (a) and 7 (b)) and from the top side (Figures 7 (c) and 7 (d)).
- Fig. 8: shows an exploded view of the device according to the second embodiment.
- Fig. 9: shows a sectional view of the device according to the second embodiment, wherein the section plane A-A is indicated in Fig. 6 (a).
- Fig. 10 (a): shows a side view of the tolerance compensation device according to a third embodiment.
- Fig. 10 (b): shows another side view of the device according to the third embodiment, wherein the device is rotated by 90° compared to the view according to Fig. 1 (a).
- Fig. 10 (c): shows a top view of the device according to the third embodiment.
- Fig. 10 (d): shows a bottom view of the device according to the third embodiment.
- Figs. 11 (a) to 11 (d): show perspective views of the device according to the third embodiment from the bottom side (Figures 11 (a) and 11 (b)) and from the top side (Figures 11 (c) and 11 (d)).
- Fig. 12: shows an exploded view of the device according to the third embodiment.
- Fig. 13: shows a sectional view of the device according to the third embodiment, wherein the section plane A-A is indicated in Fig. 10 (a).
- Fig. 14: shows a top view of a second component and a screw head of a connecting screw, wherein the second component and a first component are connected to each other by the screw, and a nut, wherein the tolerance compensation device according to any embodiment of the invention is located between the first component and the second component.
- Fig. 15: shows a sectional view of a first component and a second component connected to each other, a nut, a connecting screw, and the tolerance compensation device according to the first embodiment, wherein the section plane B-B is indicated in Fig. 14.
- Fig. 16: shows an exploded view of a first component and a second component to be connected to each other, a nut, a connecting screw, and the tolerance compensation device according to the first embodiment.
- Fig. 17: shows a sectional view of a first component and a second component connected to each other, a nut, a connecting screw, and the tolerance compensation device according to the second embodiment, wherein the section plane B-B is indicated in Fig. 14.
- Fig. 18: shows an exploded view of a first component and a second component to be connected to each other, a nut, a connecting screw, and the tolerance compensation device according to the second embodiment.
- Fig. 19: shows a sectional view of a first component and a second component connected to each other, a nut, a connecting screw, and the tolerance compensation device according to the third embodiment, wherein the section plane B-B is indicated in Fig. 14.
- Fig. 20: shows an exploded view of a first component and a second component to be connected to each other, a nut, a connecting screw, and the tolerance compensation device according to the third embodiment.
In the Figures, the central axis of the device, the direction of which is hereinafter referred to as "axial", is indicated by a line or a cross, respectively. In the top and bottom views of the device, also lateral symmetry lines perpendicular to the axial direction are drawn. In Fig. 6 (c), in addition the position of a bore is indicated with a cross and lateral symmetry lines. These lines and crosses are for better graphic representation and do not represent any physical elements of the device.

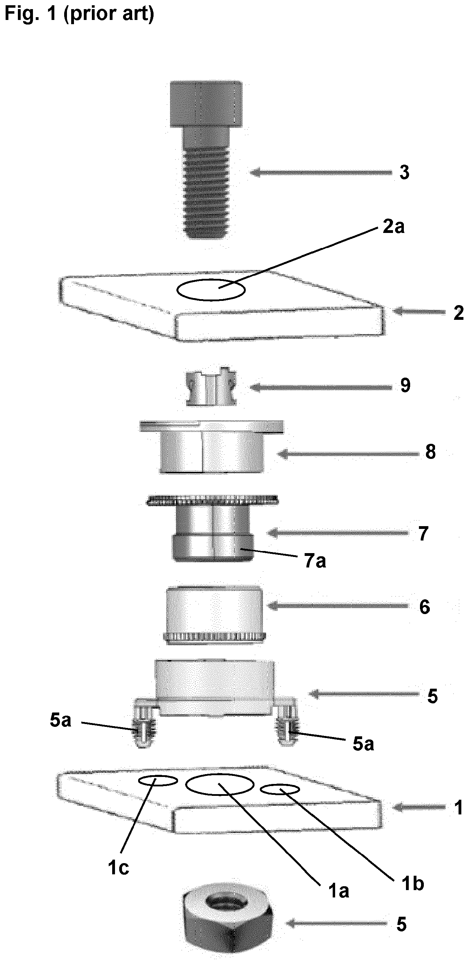

The expressions "top", "bottom", "side", etc. are in principle arbitrary. In the context of this description, they are used according to the orientation of the tolerance compensation device corresponding to the orientation shown in Fig. 1, in which the first of the components to be connected to each other is arranged at the bottom.

The tolerance compensation device according to the first embodiment is intended for an application similar to the configuration shown in Fig. 1. That is, the tolerance compensation device is inserted between two components (reference signs 1 and 2 in Fig. 1), which are to be connected to each other by a connecting screw (reference sign 3 in Fig. 1) so that the connecting screw extends through the tolerance compensation device. The connecting screw is screwed into a nut (reference sign 4 in Fig. 1) or into an internal thread provided in a bore of one of the components to be connected to each other. The tolerance compensation device according to the first embodiment is provided with at least one rotation locking structure (see below) intended to engage with one of the components to be connected to each other so that the rotation of the base element of the tolerance compensation device relative to this component is prevented. When the connecting screw is screwed into the nut or the internal thread of one of the components, the length of the tolerance compensation device is adapted because the threads of its base element and compensating element that have a handedness opposite to the handedness of the connecting screw are rotated relative to each other.

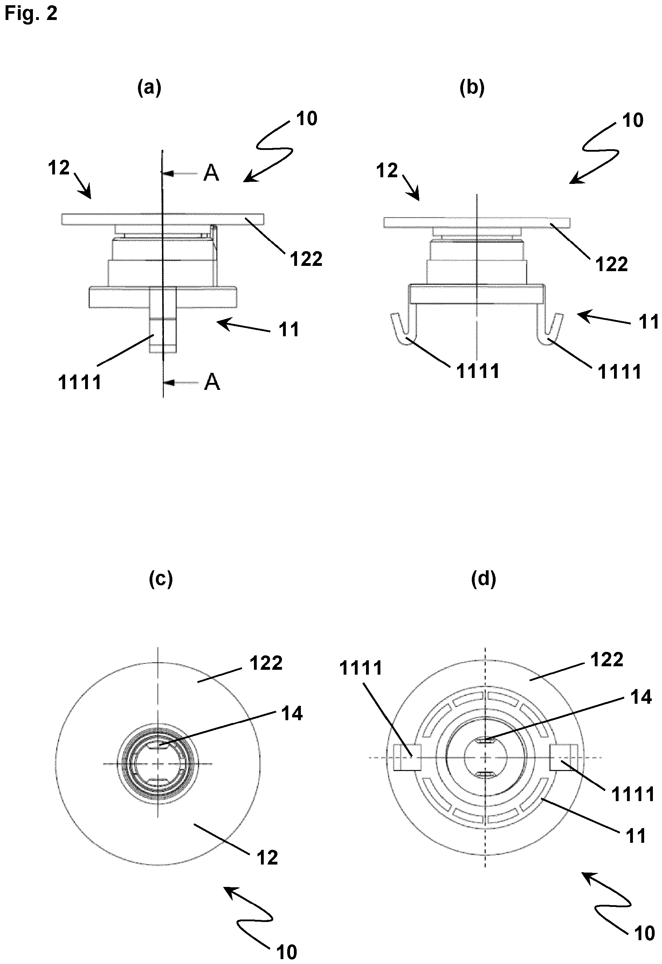

Referring to Fig. 2 (a) to Fig. 2 (d), 3 (a) to 3 (d), 4, and 5, a tolerance compensation device 10 according to the first embodiment will be described.

The tolerance compensation device 10 (hereinafter also referred to as "device") comprises a base element 11. According to first embodiment, the base element comprises a first member 111 and a second member 112. According to other embodiments, the base element may comprise additional elements.

According to the first embodiment, the first member 111 comprises a rotation locking mechanism, for instance two rotation locking structures 1111.

According to the first embodiment, the rotation locking structures 1111 are formed as snap hooks configured to snap into a bore, a slit, or the like of the first of the components to be connected to each other. By snapping the rotation locking structures 1111 into the respective bore or slit of the first component, the first member 111 and the first component are connected to each other such that the base element 11 and the first component are locked against a rotation relative to each other.

The second member 112 comprises a thread 1121, referred to as "first thread".

According to the first embodiment, the first thread is an internal thread 1121 that is configured to engage with an external thread 1211 ("second thread") of the compensating element (see below). That is, the second member 112 provides a cylindrical opening having a wall that is at least partially threaded.

Preferably, the first thread 1121 and the second thread 1211 are left-handed so that the tolerance compensation device may be used together with a conventional right-handed connecting screw.

According to the first embodiment, the second member 112 is at least partially inserted in the first member 111.

Preferably, the second member 112 is made of a metal such as, e.g. steel.

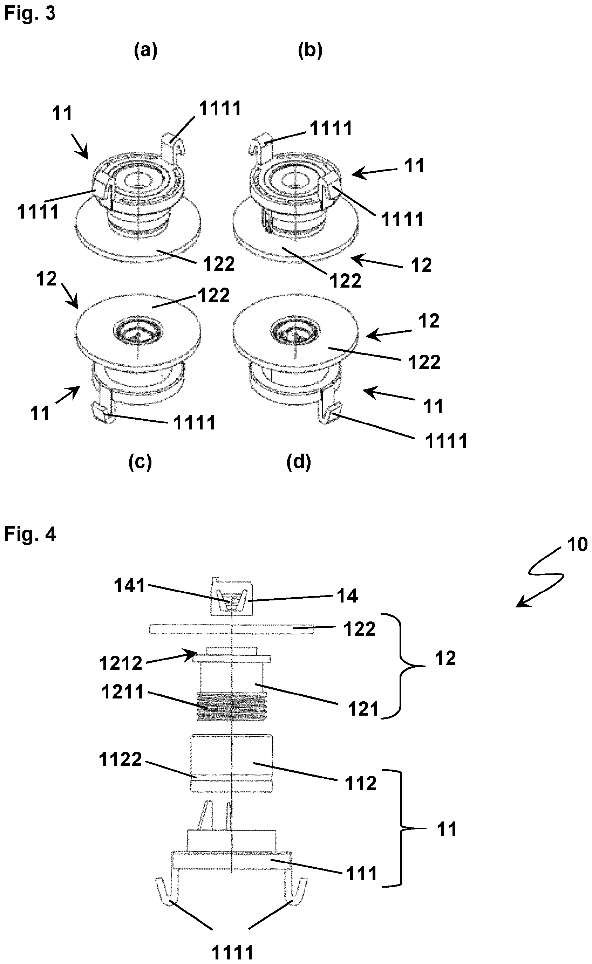

The base element 11 is a pre-fabricated hybrid element. That is, first member 111 and the second member 112 are permanently joined together prior to the use of the tolerance compensation device 10. In the exploded view shown in Fig. 4, the first member 111 and the second member 112 are shown as separate parts for the sake of comprehensibility although these parts are permanently joined together in the tolerance compensation device 10.

Preferably, the first member 111 is formed from a mouldable material by insertion moulding using the second member 112 as an insert. That is, the second member 112 is an intermediate product that is further processed by moulding the first member 111 so that after the moulding step, the first member 111 and the second member 112 are permanently joined together.

As a mouldable material, for instance, a thermoplastic polymer and/or a curing polymer or polymer precursor and/or a composite material may be used. It is also possible to use polymer mixtures or polyblends.

In order to provide a tight connection between the first member 111 and the second member 112, the second member 112 may comprise at least one protruding or recessed structure in the area where first member 111 and the second member 112 are in contact with each other. Such protruding or recessed may be in particular preferred if the first member 111 is formed by moulding because it acts as an anchoring structure connecting the first member 111 and the second member 112 in a form-fit manner. The external surface of the second member 112 shown in Fig. 4 comprises a recessed structure formed as a circular groove 1122.

The tolerance compensation device 10 further comprises a compensating element 12.

The compensating element 12 comprises a thread 1211, referred to as "second" thread. The second thread 1211 is configured to engage with the first thread 1121 of the second member 112 of the base element 11.

According to the first embodiment, the compensating element 12 comprises two parts.

The compensating element 12 according to the first embodiment comprises a body member 121 and a flange 122. The end portion of the body member 121 shown as bottom end portion in the Figures is provided with the second thread 1211. The end portion of the body member 121 shown as the top end portion in the Figures is formed as a flange seat 1212 configured to accommodate the flange 122.

The flange 122 may for instance be formed as a washer, i.e. an annular plate.

The connection between the body member 121 and the flange 122 may, for example, be a force-fit or form-fit connection. It is also possible that the flange 122 is only placed loosely on the flange seat 1212 or connected with the flange seat 1212 by a weak holding force. This may be advantageous because then a rotation of the flange relative to the body member 121 is possible. In this case, for example, the flange may be prevented from shearing against the second component when the connection between the first component and the second component is almost completely closed and the flange only lightly abuts against the second component.

Preferably, the compensating element 12 is made of a metal such as, e.g. steel. The compensating element 12 may comprise a metal body member 121 and a metal flange 122. In specific embodiments, the body member 121 is made of a metal whereas the flange 122 may be made of a different material such as a polymer material.

When the first thread 1121 and the second thread 1211 are in engagement with each other, the base element 11 and the compensating element 12 provide a passage 13.

The tolerance compensation device according to the first embodiment comprises in addition an annular spring 14 as a spring element that is adapted to be arranged in the passage 13.

Preferably, the spring 14 is configured to be retained in the passage 13 after it has been inserted therein. This has the effect that the spring 14 may be pre-arranged and does not fall out or slip during transport and storage or during use of the device 10. The spring may also have another shape, for example that of a non-closed ring, i.e. a C-shape.

The spring 14 allows the passage of the connecting screw so that at least a portion of the spring 14 is located between the external surface of the shaft of the connecting screw and the inner surface of the compensating element 12. The spring 14 provides a frictional connection between the connecting screw and the compensating element 12. Preferably, the spring 14 is a clamping spring providing such frictional connection. The frictional connection causes the compensating element 12 to be carried along with the rotational movement of the connecting screw. This carrying along may be associated with a certain degree of slippage. At the same time, the frictional connection is adapted to allow an axial movement of the connecting screw and the compensating element 12 relative to each other. This relative movement takes place in particular through sliding of the screw on the spring 13 in the axial direction. The possibility of this relative movement ensures that the forward movement of the connecting screw is not prevented.

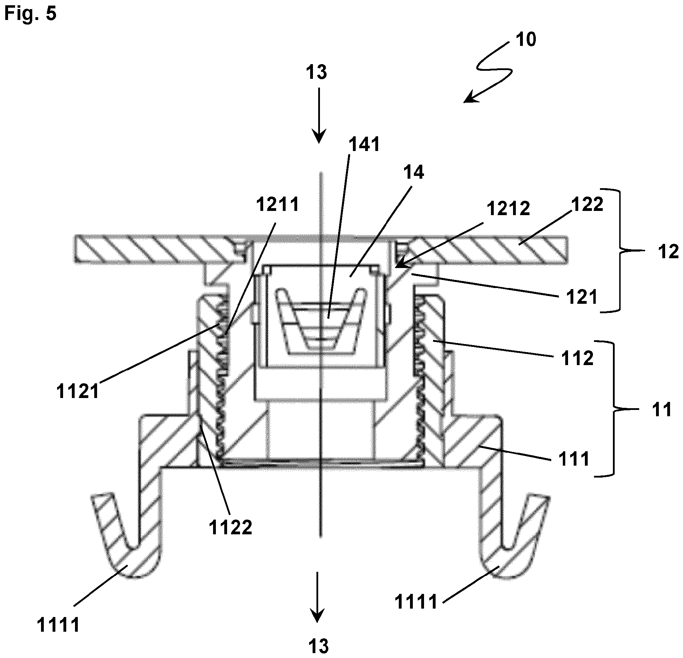

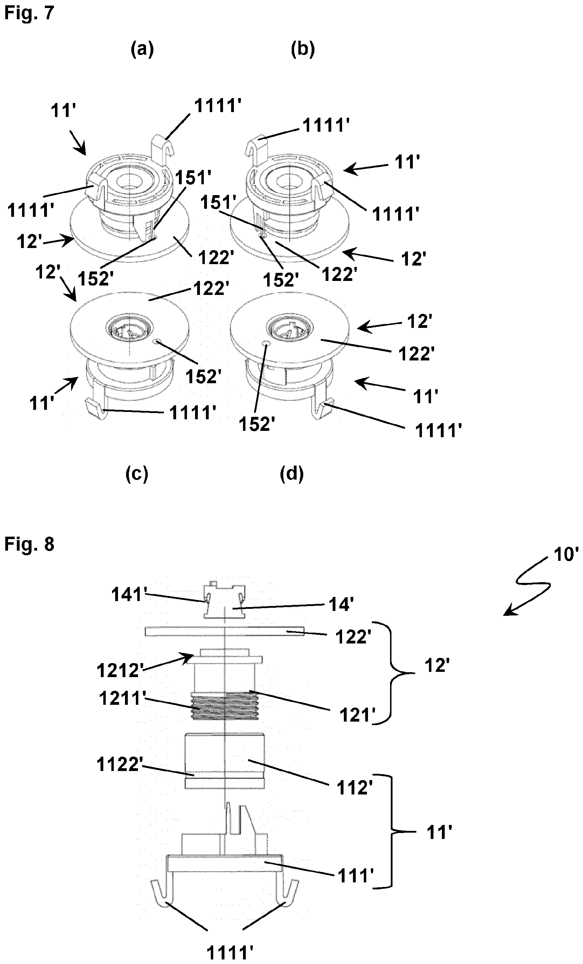

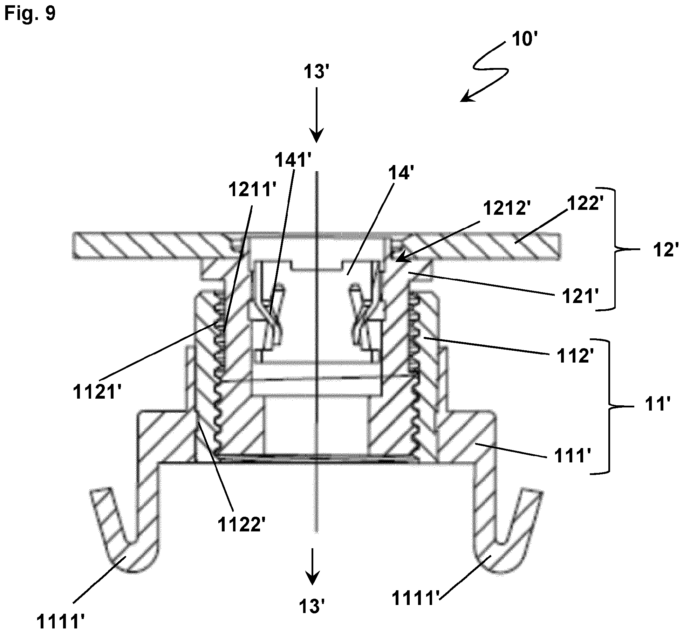

The spring 14 may have at least one projection 141 directed inwardly (i.e. towards the screw shank) or outwardly (i.e. towards the inner wall of the compensating element 12) to improve the frictional connection. In Figures 4 and 5, such a projection 141 is shown in the form of a tongue cut out of the annular spring body and bent inwards. Such tongue is shown in Figures 8 and 9 for the second embodiment and in Fig. and 13 for the third embodiment in a different view which shows that the tongues are bent inwards.

When using the tolerance compensation device 10, the first thread 1121 and the second thread 1211 are in engagement with each other. The base element 11 and the compensating element 12 then provide a passage 13. The corresponding arrows in Fig. 5 indicate the direction in which the connecting screw is inserted through the passage 13. The connecting screw is positioned so that it passes through this passage 13. The head of the connecting screw and its threaded end protrude from the passage 13 so that the connecting screw can be rotated using an appropriate tool applied to the head such that the threaded end is screwed into the nut or the thread of the second component. Between the head of the connecting screw and the tolerance compensation device 10, the first component is located, wherein preferably a portion of the shaft of the connection screw passes through a bore of the first component.

When the connecting screw is positioned in the passage 13 and rotated, the compensating element 12 is entrained by the rotation of the connecting screw and also rotates. As a consequence of the rotation of the compensating element 12, the first thread 1121 and the second thread 1211 are unscrewed and the length of the device 10 measured in the direction from the bottom to the top increases until the top of the compensating element 12 abuts the second component.

Preferably, the lengths of the connecting screw, the first thread 1121, and the second thread 1211 are adapted to ensure that the first thread 1121 and the second thread 1211 are not entirely unscrewed when the connection between the first component and the second component is completed so that in the final state, a portion of the first thread 1121 and a portion of the second thread 1211 are still in engagement with each other.

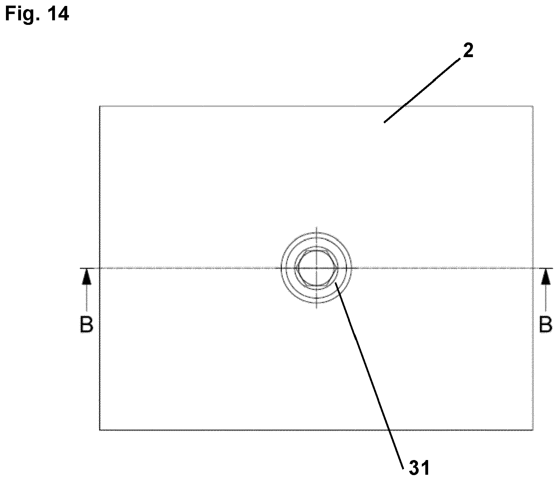

The tolerance compensation device 10 according to the first embodiment is shown in use in Figures 14 to 16.

Fig. 14 is a top view in which the second component and the screw head 31 of the connecting screw 3 are shown.

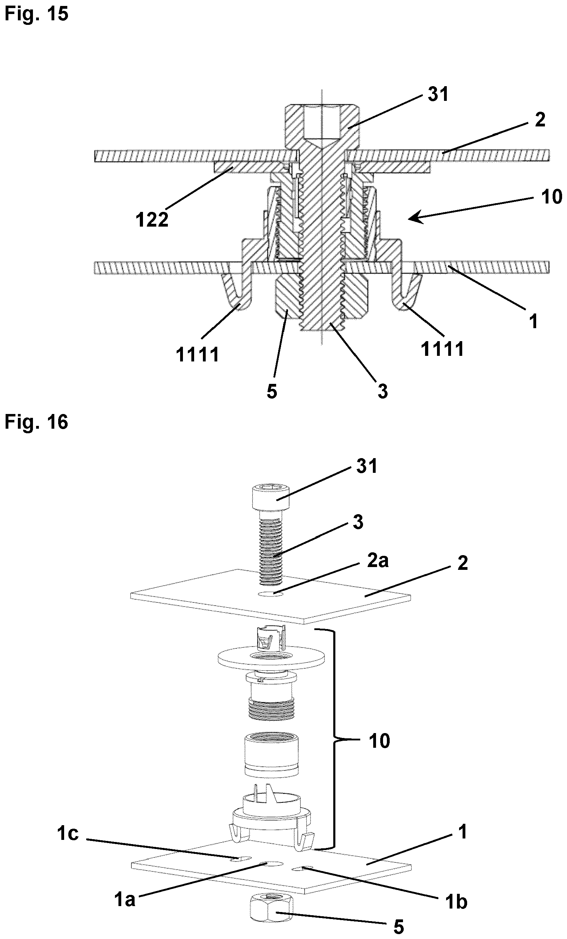

Fig. 15 is a sectional view showing the first component 1 and the second component 2, which are connected to each other by a connecting screw 3 and a nut 5. The nut 5 is optional because the internal thread for the connecting screw 3 may for instance also be arranged in the bore 1a of the first component 1. In Fig. 15, the tolerance compensation device 10 is shown in an assembled state. The connecting screw 3 passes through the bore 1a of the first component 1, the bore 2a of the second component 2, and the passage 13 of the tolerance compensation device 10. The base element 11 and the flange 122 abut the inner surface of the first component 1 and the inner surface of the second component 2, respectively, so that the distance kept between the first component 1 and the second component 2 is defined by the length of the tolerance compensation device 10, wherein this length depends on the degree to which the first thread 1121 and the second thread 1211 are screwed together. The rotation locking structures 1111 engage with the bores 1b and 1c adjacent to the bore 1a of the first component 1. The inner surfaces of the components are the surfaces facing each other when the components are connected to each other. The nut 5 and the screw head 31 abut the outer surfaces of the first component 1 and the second component 2, respectively, so that the components are connected to each other.

In Figure 16, an exploded view of the elements shown in Fig. 15 is shown so that the individual elements may be seen more clearly.

Referring to Fig. 6 (a) to Fig. 6 (d), 7 (a) to 7 (d), 8, and 9, a tolerance compensation device 10' according to a second embodiment will be described.

The elements of the tolerance compensation device 10' according to the second embodiment correspond to the elements of the tolerance compensation device 10 according to the first embodiment so that they are labelled with the same reference signs, which are marked by an apostrophe (') for the second embodiment for differentiation. For a description of the common features, reference is made to the above description of the first embodiment.

The tolerance compensation device 10' according to the second embodiment differs from the tolerance compensation device 10 according to the first embodiment in that the tolerance compensation device 10' according to the second embodiment further comprises a flange rotation lock 15'.

In the second embodiment, the flange rotation lock 15' is formed by a projection 151' and a bore 152'. The projection 151' is connected to the base element 11' or monolithically formed with the base element 11'. The bore 152' is formed in the flange 122'. The projection 151' engages in the bore 152'. The flange 122' is connected to the body member 121' in such a way that the flange 122' and body member 121' are rotatable relative to each other.

When a connecting screw is passed through the passage 13' and screwed into a nut or threaded hole of the second component to connect the first component and the second component, the body member 121' rotates. However, due to the engagement of the projection 151' in the bore 152', the flange 122' does not rotate but remains in a constant angular position relative to the base element 11'.

The flange rotation lock 15' may, for example, prevent the flange 122' from shearing at the first component.

The bore 152' may be a through bore, a blind bore, or any other type of recess configured to engage with the projection 151'.

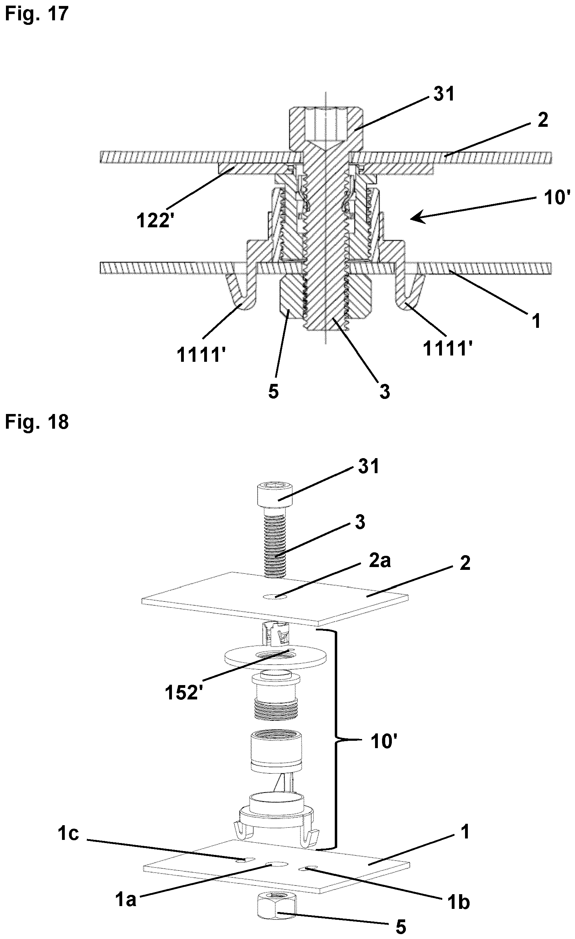

The tolerance compensation device 10' according to the second embodiment is shown in use in Figures 14, 17, and 18. The interaction of the tolerance compensation device 10' according to the second embodiment, the first component 1, the second component 2, the connecting screw 3, and the optional nut 5 corresponds to the situation described for the first embodiment in connection with Figures 14 to 16 above so that reference is made to the above description.

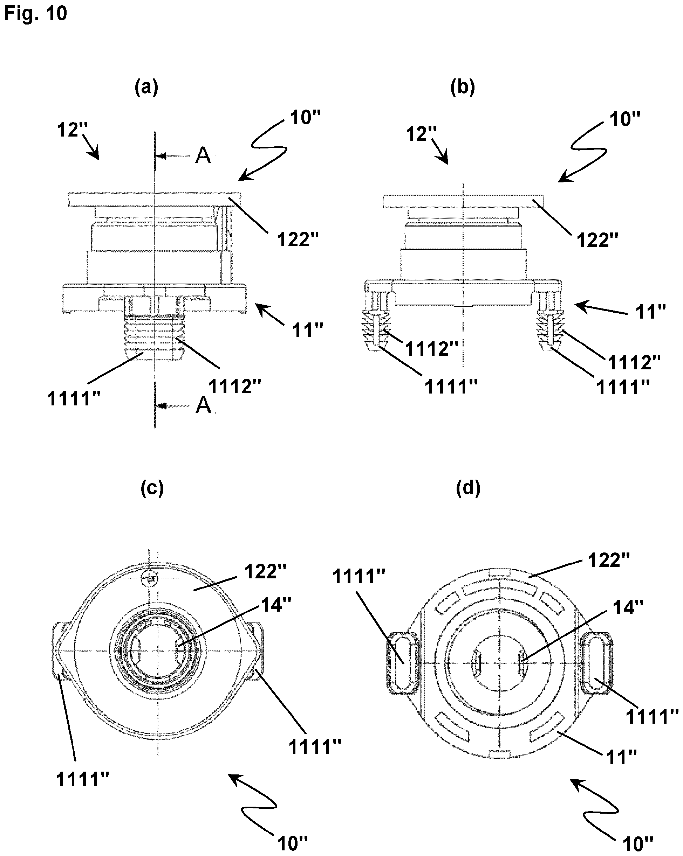

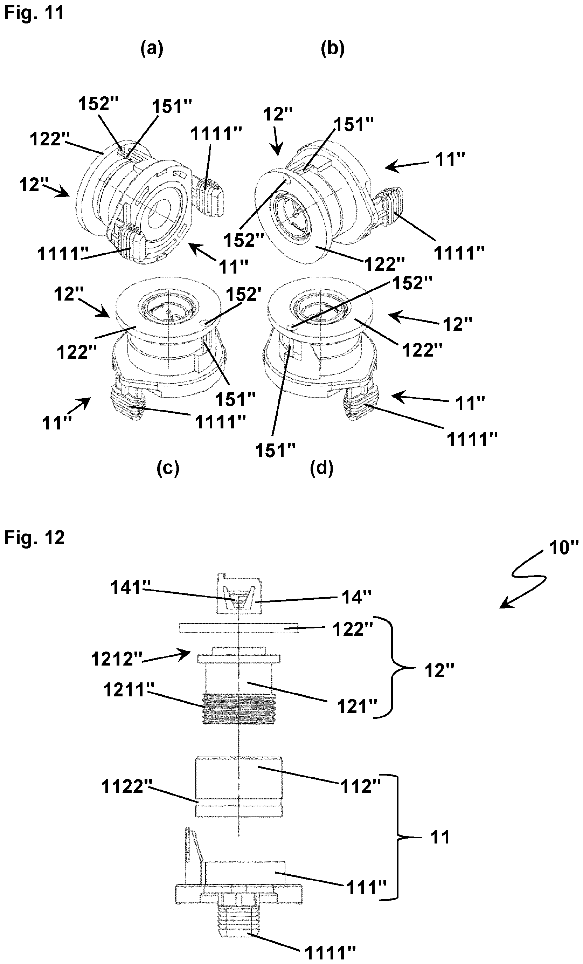

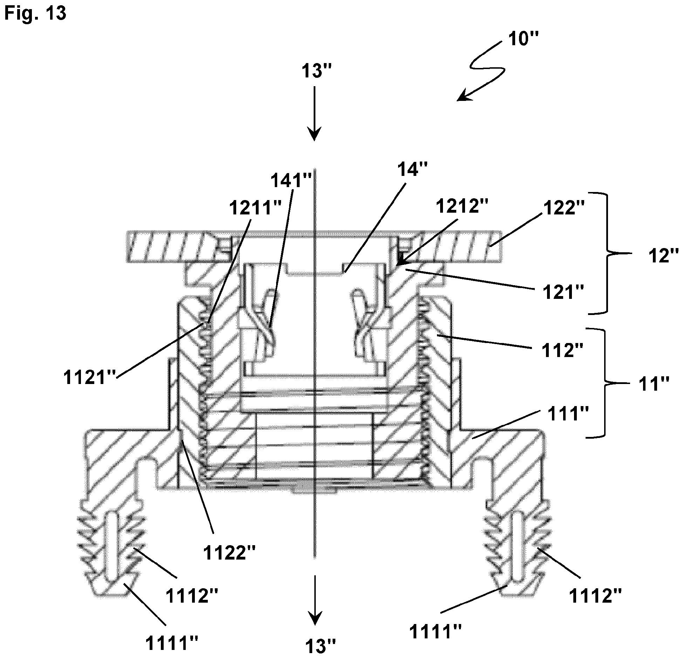

Referring to Fig. 10 (a) to Fig. 10 (d), 11 (a) to 11 (d), 12, and 13, a tolerance compensation device 10" according to the third embodiment will be described.

The elements of the tolerance compensation device 10" according to the third embodiment correspond to the elements of the tolerance compensation device 10 according to the first embodiment and to the tolerance compensation device 10' according to the second embodiment so that they are labelled with the same reference numbers, which are marked by a double apostrophe (") for the third embodiment for differentiation. For a description of the common features, reference is made to the above description of the first embodiment and the second embodiment.

The tolerance compensation device 10" according to the third embodiment differs from the tolerance compensation device 10' according to the second embodiment in that the rotation locking structures are formed in a different manner.

The tolerance compensation device 10" according to the third embodiment comprises rotation locking structures 1111" in the form of pins configured to be inserted in bores of the first component such that the pins are held in the bores.

The number of the pins may be two as shown in the Figures. It may also be greater that two in alternative embodiments. It is also possible that only one pin is present.

Preferably, a pin 1111" provided as rotation locking structure comprises retaining structures 1112" configured to enhance the retention force with which the pin is held in the bore.

The retraining structures 1112" may, for example, be in the form of projections, preferably annular projections, in particular with a barbed function. For example, the retaining structures 1112" may be configured to deform when the pin is inserted into the bore and then resist the withdrawal of the pin.

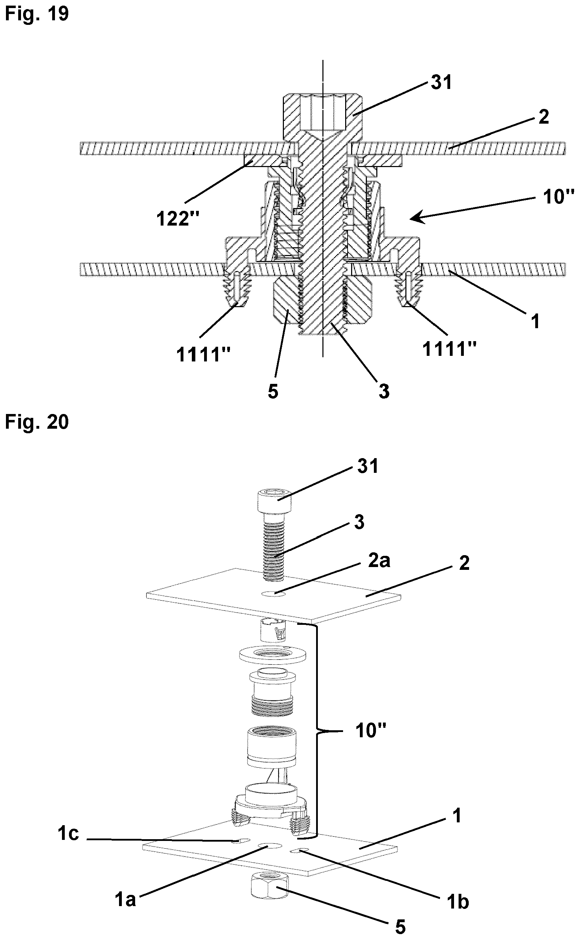

The tolerance compensation device 10" according to the second embodiment is shown in use in Figures 14, 19, and 20. The interaction of the tolerance compensation device 10" according to the third embodiment, the first component 1, the second component 2, the connecting screw 3, and the optional nut 5 corresponds to the situation described for the first embodiment in connection with Figures 14 to 16 above so that reference is made to the above description.

The tolerance compensation device according to a fourth embodiment corresponds to the tolerance compensation device according to the third embodiment but does not comprise a flange rotation lock. The fourth embodiment can therefore be seen as a combination of the first embodiment and the third embodiment.

According to further embodiments which may otherwise correspond to the aforementioned embodiments, only one rotation locking structure is present or the number of the rotation locking structures is greater that two.

If only one rotation locking structure is present, the rotation locking effect is achieved because the rotation locking structure is displaced from the position corresponding to the axis of the connecting screw. For the function of the tolerance compensation device, it is decisive that the rotation of the base element together with the connecting screw is prevented when the connecting screw is screwed in the nut or the thread of the first component. The prevention of such rotation of the base element jointly with the connecting screw is meant with the term "locked against rotation" in the context of the present disclosure.

According to further embodiments which may otherwise correspond to the aforementioned embodiments, the at least one rotation locking structure is designed in a different manner. It may for instance be formed by a protrusion acting as a pin. It may for instance also be formed by a bore, so that the connection of the first member and the first component is accomplished by an additional fastener such as a screw, a nail, or the like. It is also possible that the connection is provided by means of an adhesive; in this case, for instance an adhesive strip may be provided on the bottom side of the first member.

According to further embodiments which may otherwise correspond to the aforementioned embodiments, the second member comprises an external thread configured to engage with an internal thread of the compensating element. In this case, at least the thread portion of the compensating element is intended to be put over a portion of the base element.

According to further embodiments which may otherwise correspond to the aforementioned embodiments, the flange is permanently connected to the body member.

According to further embodiments which may otherwise correspond to the aforementioned embodiments, the flange is formed monolithically with the body member.

According to further embodiments which may otherwise correspond to the aforementioned embodiments, the compensating element does not have any flange.

According to further embodiments which may otherwise correspond to the aforementioned embodiments, multiple springs elements are provided.

In specific embodiments, the at least one spring is connected to or integral with the compensating element 12.

According to further embodiments which may otherwise correspond to the aforementioned embodiments, a flange rotation lock is provided in the form of a protrusion of the flange and a bore of the base element.

According to further embodiments which may otherwise correspond to the aforementioned embodiments, the flange rotation lock may comprise multiple protrusions and multiple bores.

## Claims

1. Tolerance compensation device (10, 10', 10") for compensating for tolerances between a first component and a second component, wherein the first and second components are to be connected to each other by a connecting screw,
the tolerance compensation device (10, 10', 10") comprising
- a base element (11, 11', 11") comprising a first member (111, 111', 111") configured to be connected to the first component and a second member (112, 112', 112") comprising a first thread (1121, 1121', 1121"),
- a compensating element (12, 12', 12") configured to abut against the second component and comprising a second thread (1211, 1211', 1211"),
wherein the first thread (1121, 1121', 1121") and the second thread (1211, 1211', 1211") are configured to engage with each other,
wherein, when the first thread (1121, 1121', 1121") and the second thread (1211, 1211', 1211") engage with each other, the base element (11, 11', 11") and the compensating element (12, 12', 12") form a passage (13, 13', 13") for the connecting screw such that at least a portion of the compensating element (12, 12', 12") is rotated by a rotation of the connecting screw,
wherein the base element (11, 11', 11") comprises at least one rotation locking structure (1111, 1111', 1111") configured to engage with the first component such that the connection between the first component and the base element (11, 11', 11") is locked against rotation, and
wherein the base element (11, 11', 11") is a pre-fabricated hybrid element comprising the first member (111, 111', 111") and the second member (112, 112', 112") being permanently joined together.

2. Tolerance compensation device (10, 10', 10") according to claim 1,
wherein the second member (112, 112', 112") is at least partially inserted in the first member (111, 111', 111").

3. Tolerance compensation device (10, 10', 10") according to any of claims 1 to 2,
wherein the compensating element is obtained by insertion moulding using the second member (112, 112', 112") as an insert and moulding the first member (111, 111', 111").

4. Tolerance compensation device (10, 10', 10") according to any of claims 1 to 3,
wherein the first thread (1121, 1121', 1121") is an internal thread and the second thread (1211, 1211', 1211") is an external thread.

5. Tolerance compensation device (10, 10', 10") according to any of claims 1 to 4,
wherein the second member (112, 112', 112") comprises a metal, wherein preferably the second member (112, 112', 112") is made of a metal, and/or
wherein the compensating element comprises a metal, wherein preferably the compensating element is made of a metal.

6. Tolerance compensation device (10, 10', 10") according to any of claims 1 to 7,
wherein the passage (13, 13', 13") for the connecting screw is configured to provide a frictional connection between the connecting screw and the compensating element such that the compensating element is rotated by a rotation of the connecting screw,
wherein the frictional connection allows the screw to move axially relative to the compensating element.

7. Tolerance compensation device (10, 10', 10") according to claim 6,
wherein the tolerance compensation device further comprises a spring element (14, 14', 14"), in particular a clamping spring, providing the frictional connection,
wherein preferably the spring element (14, 14', 14") is formed separately from the compensating element, and/or
wherein preferably the spring element (14, 14', 14") comprises a metal, wherein preferably the spring element (14, 14', 14") is made of a metal.

8. Tolerance compensation device (10, 10', 10") according to any of claims 1 to 7,
wherein the compensating element comprises a flange (122, 122', 122") configured to abut the second component,
wherein preferably the compensating element comprises a body member and the flange (122, 122', 122") is positioned on the body member, preferably attached thereto.

9. Tolerance compensation device (10', 10") according to claim 8,
wherein the tolerance compensation device further comprises a flange rotation lock (15', 15") configured to hold the flange (122', 122") in a constant angular position relative to the base element (11, 11', 11") when the body member is rotated relative to the base element (11, 11', 11"),
wherein preferably the flange rotation lock (15', 15") is formed as at least one bore (152', 152") and at least one protrusion (151', 151") engaging with each other,
wherein more preferably the at least one protrusion is provided at the base element (11, 11', 11") and the at least one bore is provided at the flange (122', 122").

10. Tolerance compensation device (10, 10', 10") according to any of claims 1 to 9,
wherein the at least one rotation locking structure (1111, 1111', 1111") is configured to engage with a bore provided in the first component.

11. Tolerance compensation device (10, 10', 10") according to any of claims 1 to 10,
wherein the at least one rotation locking structure (1111, 1111', 1111") is configured to be brought into engagement by moving the same in a direction corresponding to the axial direction of the screw, and/or
wherein the at least one rotation locking structure (1111, 1111') provides a snap connection with the first component, wherein preferably the at least one rotation locking structure (1111, 1111') is formed as a snap hook.

12. Tolerance compensation device (10") according to any of claims 1 to 11,
wherein the at least one rotation locking structure (1111") is formed as a pin (1111"),
wherein preferably the pin (1111') comprises at least one retaining structure (1112") configured to retain (1111") the pin in a bore.

13. Connection system for connection a first component and a second component by a connecting screw, comprising
- a tolerance compensation device (10, 10', 10") according to any of claims 1 to 12 and
- the connecting screw,
wherein the connecting screw has a thread with a handedness being opposite to the handedness of the first thread (1121, 1121', 1121") and the second thread (1211, 1211', 1211").

14. Connection system according to claim 13, further comprising a nut configured to engage with the connecting screw.

15. Method of manufacturing a tolerance compensation device (10, 10', 10") according to any of claims 1 to 12, including manufacturing the base element (11, 11', 11"),
wherein manufacturing the base element (11, 11', 11") includes providing the second member (112, 112', 112") and manufacturing the first member (111, 111', 111") so that the first member (111, 111', 111") is permanently joined to the second member (112, 112', 112") or
wherein manufacturing the base element (11, 11', 11") includes providing the first member (111, 111', 111") and the second member (112, 112', 112") and permanently joining together the first member (111, 111', 111") and the second member (112, 112', 112").

## Amended claims

### Amended claims in accordance with Rule 137(2) EPC.

1. Tolerance compensation device (10, 10', 10") for compensating for tolerances between a first component and a second component, wherein the first and second components are to be connected to each other by a connecting screw,
the tolerance compensation device (10, 10', 10") comprising
- a base element (11, 11', 11") comprising a first member (111, 111', 111") configured to be connected to the first component and a second member (112, 112', 112") comprising a first thread (1121, 1121', 1121"),
- a compensating element (12, 12', 12") configured to abut against the second component and comprising a second thread (1211, 1211', 1211"),
wherein the first thread (1121, 1121', 1121") and the second thread (1211, 1211', 1211") are configured to engage with each other,
wherein, when the first thread (1121, 1121', 1121") and the second thread (1211, 1211', 1211") engage with each other, the base element (11, 11', 11") and the compensating element (12, 12', 12") form a passage (13, 13', 13") for the connecting screw such that at least a portion of the compensating element (12, 12', 12") is rotated by a rotation of the connecting screw,
wherein the base element (11, 11', 11") comprises at least one rotation locking structure (1111, 1111', 1111") configured to engage with the first component such that the connection between the first component and the base element (11, 11', 11") is locked against rotation,
wherein the base element (11, 11', 11") is a pre-fabricated hybrid element comprising the first member (111, 111', 111") and the second member (112, 112', 112") being permanently joined together,
wherein the passage (13, 13', 13") for the connecting screw is configured to provide a frictional connection between the connecting screw and the compensating element such that the compensating element is rotated by a rotation of the connecting screw,
wherein the frictional connection allows the screw to move axially relative to the compensating element, and
wherein the tolerance compensation device further comprises a spring element (14, 14', 14") providing the frictional connection.

2. Tolerance compensation device (10, 10', 10") according to claim 1,
wherein the second member (112, 112', 112") is at least partially inserted in the first member (111, 111', 111").

3. Tolerance compensation device (10, 10', 10") according to any of claims 1 to 2,
wherein the compensating element is obtained by insertion moulding using the second member (112, 112', 112") as an insert and moulding the first member (111, 111', 111").

4. Tolerance compensation device (10, 10', 10") according to any of claims 1 to 3,
wherein the first thread (1121, 1121', 1121") is an internal thread and the second thread (1211, 1211', 1211") is an external thread.

5. Tolerance compensation device (10, 10', 10") according to any of claims 1 to 4,
wherein the second member (112, 112', 112") comprises a metal, wherein preferably the second member (112, 112', 112") is made of a metal, and/or
wherein the compensating element comprises a metal, wherein preferably the compensating element is made of a metal.

6. Tolerance compensation device (10, 10', 10") according to any of claims 1 to 5,
wherein the spring element (14, 14', 14") is a clamping spring.

7. Tolerance compensation device (10, 10', 10") according to any of claims 1 to 6,
wherein the spring element (14, 14', 14") is formed separately from the compensating element, and/or
wherein the spring element (14, 14', 14") comprises a metal, wherein preferably the spring element (14, 14', 14") is made of a metal.

8. Tolerance compensation device (10, 10', 10") according to any of claims 1 to 7,
wherein the compensating element comprises a flange (122, 122', 122") configured to abut the second component,
wherein preferably the compensating element comprises a body member and the flange (122, 122', 122") is positioned on the body member, preferably attached thereto.

9. Tolerance compensation device (10', 10") according to claim 8,
wherein the tolerance compensation device further comprises a flange rotation lock (15', 15") configured to hold the flange (122', 122") in a constant angular position relative to the base element (11, 11', 11") when the body member is rotated relative to the base element (11, 11', 11"),
wherein preferably the flange rotation lock (15', 15") is formed as at least one bore (152', 152") and at least one protrusion (151', 151") engaging with each other,
wherein more preferably the at least one protrusion is provided at the base element (11, 11', 11") and the at least one bore is provided at the flange (122', 122").

10. Tolerance compensation device (10, 10', 10") according to any of claims 1 to 9,
wherein the at least one rotation locking structure (1111, 1111', 1111") is configured to engage with a bore provided in the first component.

11. Tolerance compensation device (10, 10', 10") according to any of claims 1 to 10,
wherein the at least one rotation locking structure (1111, 1111', 1111") is configured to be brought into engagement by moving the same in a direction corresponding to the axial direction of the screw, and/or
wherein the at least one rotation locking structure (1111, 1111') provides a snap connection with the first component, wherein preferably the at least one rotation locking structure (1111, 1111') is formed as a snap hook.

12. Tolerance compensation device (10") according to any of claims 1 to 11,
wherein the at least one rotation locking structure (1111") is formed as a pin (1111"),
wherein preferably the pin (1111') comprises at least one retaining structure (1112") configured to retain (1111") the pin in a bore.

13. Connection system for connection a first component and a second component by a connecting screw, comprising
- a tolerance compensation device (10, 10', 10") according to any of claims 1 to 12 and
- the connecting screw,
wherein the connecting screw has a thread with a handedness being opposite to the handedness of the first thread (1121, 1121', 1121") and the second thread (1211, 1211', 1211").

14. Connection system according to claim 13, further comprising a nut configured to engage with the connecting screw.

15. Method of manufacturing a tolerance compensation device (10, 10', 10") according to any of claims 1 to 12, including manufacturing the base element (11, 11', 11"),
wherein manufacturing the base element (11, 11', 11") includes providing the second member (112, 112', 112") and manufacturing the first member (111, 111', 111") so that the first member (111, 111', 111") is permanently joined to the second member (112, 112', 112") or
wherein manufacturing the base element (11, 11', 11") includes providing the first member (111, 111', 111") and the second member (112, 112', 112") and permanently joining together the first member (111, 111', 111") and the second member (112, 112', 112").
